# EUROPEAN PATENT SPECIFICATION

(11) **EP 3 232 815 B1**
(45) Date of publication and mention of the grant of the patent: **10.06.2020**
(21) Application number: 15808230.5
(22) Date of filing: 11.12.2015
(51) Int. Cl.: A23L 23/10, A23L 29/212, A23L 11/00

(54) **SAVOURY CONCENTRATES WITH A JELLIFIED TEXTURE BASED ON LEGUMINOUS STARCH**
WOHLSCHMECKENDE KONZENTRATE MIT GELIERTER TEXTUR AUF BASIS VON HÜLSENFRUCHTSTÄRKE
CONCENTRÉS SAVOUREUX AVEC UNE TEXTURE GÉLIFIÉE À BASE D'UN AMIDON DE LÉGUMINEUSE

(30) Priority: 19.12.2014 EP 14199090
(43) Date of publication of application: 25.10.2017
(73) Proprietor: Société des Produits Nestlé S.A., 1800 Vevey (CH)
(72) Inventor: SCHWAEGERL, Martina, 78315 Radolfzell (DE); MAIER, Claire, 78224 Singen (DE); HANLE, Christoph, 78224 Singen (DE); LAGARRIGUE-GOJANI, Sophie, 78224 Singen (DE)
(74) Representative: Dinger, Hansjörg
(86) International application number: PCT/EP2015/079456
(87) International publication number: WO 2016/096663

(56) References cited:
- EP-A1- 2 452 570
- WO-A1-2014/009079
- WO-A1-2014/053288
- US-A1- 2013 309 385
- DATABASE FSTA [Online] INTERNATIONAL FOOD INFORMATION SERVICE (IFIS), FRANkFURT-MAIN, DE; 2013, SONG XIAO-MIN ET AL: "The textural properties of broad bean starch.", XP002736248, Database accession no. FS-2013-11-Le0804 & FOOD SCIENCE AND TECHNOLOGY, vol. 38, no. 6, 2013, page 180, CORRESPONDENCE ADDRESS, LIU JIAN-FU, SCHOOL OF SCIENCE, TIANJIN UIVERSITY OF COMMERCE, TIANJIN 300134, CHINA

## Description

The invention relates to a composition in gel form for preparing a food product, to a process for preparing a food product, and to the use of the composition for preparing a food product. In particular, the invention relates to a gel composition comprising a legume starch for preparing savoury food products such as bouillons, condiment, seasoning, sauces, gravies, and soups.

Concentrated food products, such as dehydrated gravies and sauces, and bouillon or stock cubes, have been known for many years. Savoury dehydrated products are becoming increasingly unattractive to consumers due to a perception that they are not natural, they have an old fashioned image, and they have an artificial appearance. Some products have a pasty texture, but these are typically fat-based and therefore have a high fat content and consequently a poor health or nutritional profile. In the search for alternative product types having different characteristics and advantages over traditional food concentrates, food compositions concentrated in gel form have been developed. A number of such products are now known. They are typically based on the presence of a gelling agent or a combination of two or more gelling agents.

Attempts have been previously made to find improved gelling ingredients that are suitable for concentrated food products. Combinations of two hydrocolloid polysaccharides have been found to exhibit suitable gelling properties. For example, WO 2007/068484, WO 2008/151850, WO 2008/151851, WO 2008/151852 and WO 2008/151853 describe a combination of xanthan and various galactomannans (locust bean gum, tara gum, guar gum, cassia gum) or konjac gum as gelling agents. One problem with these combinations is that when increasing the salt content of the food product, the dosage of the gelling agents needs to be increased since the gel loses strength as the salt content is increased. There is a need for a gelling agent composition which is stable and efficient over a wide range of salt concentrations. Another problem is that these combinations, when used to make a soup or sauce, are still able to form a gel very quickly during cooling. This can lead to an undesired texture for consumption of the product when the dish is cooling. There is therefore a need for a gelling agent composition which does not (re-)gel during the normal food consumption times. Furthermore, the regulatory status of cassia gum is limited to dehydrated food products. The xanthan/ locust bean gum products present good melting properties on hot food but they tend to burn in direct contact with a hot pan and they have to be produced with a dosing temperature above 50°C. WO 2012/062919 describes a combination of carrageenan and xanthan. This gelling agent has the advantage that when increasing the salt content of the food product, the dosage of the gelling agents needs not to be increased since the gel loses no strength. A disadvantage may be the slower dissolution properties in the final dish.

Modified starch as a gelling agent is described in WO 2008/151854. Non-modified starches, however, have a better perception by the consumer but typically suffer from the folowing drawbacks:
- Non-modified starches normally need high concentrations to form a gel and are as such unsuitable for a concentrated format
- Furthermore, the resulting gels are prone to syneresis (water separation) during shelf-life
- non-modified starches are usually more sensitive to decreasing pH
- Products made with non-modified starches form film/burnings in direct contact to a hot pan.

A combination of gelatin and starch is described in WO 2007/068402 and WO 2007/068483. The main problem with this combination is that a very high dosage of gelling agent is needed (greater than 10%). Also, gelatin is not popular as a food ingredient for those on a vegetarian diet.

WO 2012/097930 describes a food concentrate in a gel format comprising 10 to 50% un-gelatinised starch that will develop the viscosity during product preparation. This composition presents the disadvantage that a high amount of polyols (5 to 60%) is used in the composition to get the right gel texture that is otherwise affected by the incorporation of the un-gelatinised starch. Polyols might not be perceived as very natural and attractive by consumers. Furthermore, certain polyols in too high amounts may have not desired side effects with some consumers, such as e.g. a non-desired laxative effect. Pea starch is described as binding agent after dissolution of the concentrate to make a sauce. Pea starch is not described as gelling agent.

There is a persisting need for a composition having the texture of a gel. The gel-forming composition should be able to set after production and dissolve quickly during product preparation (during a standard heating step or during dilution of the gel composition in hot water) . There is further a need for a gel composition for preparing a food product that is stable during transportation and storage, and shows no or a low syneresis (up to 2% of the total composition) during storage typically for a few weeks or even up to several months after.

The object of the present invention is to improve the state of the art and to provide a gel composition that at least goes part way to overcoming one or more of the above mentioned disadvantages of existing gel compositions or at least provides a useful alternative. Particularly, the objective is to provide a gel composition which: i) dissolves easily in hot water or hot food; ii) does not readily and quickly reform a gel upon cooling of a prepared food-dish; iii) does not make use of an additive such as polyols, which may not be favourably perceived by consumers, iv) does not form film/ burnings by direct contact with a hot pan; v) can be filled below 50°C to form a gel; vi) is perceived healthy/natural by the consumers; vii) does not need xanthan; viii) shows no syneresis under normal storage conditions (20-30°C) after 3 months.

The object of the present invention is achieved by the subject matter of the independent claims. The dependent claims further develop the idea of the present invention.

Accordingly, the present invention provides in a first aspect a composition for preparing a food product, the composition comprising:
i) water in an amount of 44 to 65% (by weight of the total composition),
ii) flavourings in an amount of 1 to 45% (by weight of the total composition),
iii) salt in an amount of 10 to 41% (by weight of the total moisture),
iv) legume starch in an amount of 4 to 11% (by weight of the total moisture);
wherein the composition is in form of a gel and does not include polyol, guar gum, locust bean gum, tara gum, cassia gum, konjac mannan, carrageenan or any combination thereof.

In a second aspect, the invention pertains to a process for preparing a composition for preparing a food product comprising the steps:
a) mixing legume starch as a gelling agent in an amount of 4 to 11% (by weight of the total moisture) in water at a temperature below 60°C; wherein optionally sugar/glucose powder is mixed with the legume starch before water is added
b) heating the mixture to a temperature of at least 80°C, preferably to at least 90°C and maintain the temperature for at least 2 min to cook the starch
c) adding salt in an amount of 10 to 41% (by weight of the total moisture) and adding ingredients which are not heat sensitive or need a pasteurisation and adding flavourings in an amount of 1 to 45% (by weight of the total composition) and mixing further;
d) pasteurize the mixture of step c) at a temperature of at least 70°C, preferably of at least 80°C;
e) cooling the mixture after pasteurization to a temperature within the range 30°C to 75°C, preferably 35°C to 70°C, more preferably 40°C to 70°C; and
f) after cooling optionally mixing heat sensitive ingredients to form the composition;
g) filling the composition from step e) or f) into packaging containers;
h) allow setting of the composition resulting from step g);
wherein the composition is in form of a gel and does not include polyol, guar gum, locust bean gum, tara gum, cassia gum, konjac mannan, carrageenan or any combination thereof, and wherein the composition comprises water in an amount of 44 to 65 % (by weight of the total composition) .

A third aspect of the invention is a use of the composition according to claims 1 to 10 for the preparation of a food product.

Water (as amount) is herein to be understood as the total amount of moisture present. The concentration of salt is to be calculated as (amount of salt)/(amount of salt + total moisture). The same relates for other dissolved matter such as the legume starch gelling agent (amount legume starch)/(legume starch + total moisture).

It has now been found by the inventors that legume starch in a composition with water, flavourings and salt has certain desirable and surprising characteristics. It forms a gel, is easily dosed into packaging containers and is easily dissolved in hot water or hot food and showed no syneresis with xanthan or without xanthan under normal storage conditions (20-30°C) after 3 months. It has been found that legume starches especially pea starch could possibly gel in a savoury concentrate with low salt content (up to 7% by weight of the total moisture) but the resulting gel show a high amount of syneresis over storage which is not desired as it leads to minor acceptance of the product. Surprisingly, it has been found that legume starches especially pea starch could gel in a savoury concentrate with at high salt content (up to 41% by weight of the total moisture) without showing any syneresis without xanthan.

In one embodiment, the legume starch of the invention is not chemically modified, but can be physically modified, e.g. pregelatinised.

The present invention further pertains to a composition for preparing a food product, the composition comprising:
i) water in an amount of 44 to 65% (by weight of the total composition),
ii) flavourings in an amount of 1 to 45% (by weight of the total composition),
iii) salt in an amount of 10 to 41% (by weight of the total moisture),
iv) pea starch in an amount of 4 to 11% (by weight of the total moisture);
wherein the composition is in form of a gel and does not include polyol, guar gum, locust bean gum, tara gum, cassia gum, konjac mannan, carrageenan or any combination thereof.

The term "gel", in the context of this invention, means a solid or semi-solid material formed by interaction with one or more polysaccharides and water, and that comes out of the packaging in one piece. Once removed from the packaging, it does not flow on a time scale of a few minutes. The product is able to keep its shape over a time scale of a few minutes. The rupture strength of the mentioned product is at least 15g. Preferably the rupture strength of the mentioned product is at least 20g. Preferably the rupture gel strength of the mentioned product is between 15g and 200g. Most preferably the rupture gel strength of the mentioned product is between 22g and 80g.

The term "flavourings" in the context of this invention means flavouring agents, taste enhancing ingredients, herbs, spices, vegetables, meat and fish components (in liquid or powder form), maltodextrin or mixtures thereof, which are suitable for being used in a food product or food concentrate product. Taste enhancing ingredients may be provided by monosodium glutamate (MSG) and/or yeast extract etc.

"Salt" refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable. In a further embodiment, the composition of the invention comprises salt in the range 10 to 41% (by weight of the total moisture), preferably from 12 to 37%, preferably from 14 to 34%, preferably from 16 to 30%, preferably from 18 to 26%, more preferably from 20 to 24% (by weight of the total moisture).

The term "legume starch" refers to a starch from the plant family of leguminosae. In context preferred embodiment of this invention "legume starch" includes pea starch, chickpea starch, lentil starch, bean starch, or a combination thereof. Preferably legume starch includes pea starch, chickpea starch, mung bean starch, red lentil starch, or a combination thereof. Most preferably legume starch is pea starch.

Legume flours can also be used as a source of legume starch. The term "legume flour" refers to flour from the plant family of leguminosae. In the context of this invention "legume flour" includes pea flour, chickpea flour, lentil flour, bean flour, or a combination thereof. Preferably legume flour includes pea flour, chickpea flour, mung bean flour, red lentil flour, or a combination thereof. Preferably legume flour is pea flour. The person skilled in the art is calculating based on the amount of starch how much flour has to be used to fall within this invention.

The composition of the invention comprises the legume starch in the range 4 to 11% by weight of the total moisture, preferably from 4 to 10%, preferably from 4 to 9% by weight of the total moisture.

In a further embodiment, in case pea starch is used the composition comprises an amount in the range 4 to 11% by weight of the total moisture, preferably from 4 to 10%, preferably from 4.5 to 9%, more preferable from 5 to 8.5%, most preferable from 6 to 8% by weight of the total moisture.

In the context of this invention the composition may further comprise glucose/sugar in an amount of 2 to 12% (by weight of the total composition), preferably from 3 to 9% (by weight of the total composition).

The water activity of the product is preferably below 0.9, preferably below 0.87, preferably between 0.6 and 0.87, more preferably between 0.7 and 0.85.

Furthermore, it has been found that even further improved gels can be obtained by combining legume starch with xanthan. The gels dissolve even more readily in hot water.

In a further preferred embodiment, the composition of the invention further comprises xanthan. Preferably, xanthan is present in the composition of the invention in an amount of 0.05 to 0.5%, more preferably from 0.1 to 0.35%, most preferably from 0.15 to 0.3%. (by weight of the total composition). Xanthan is added together with the starch in the first process step.

"Xanthan" is a hetero-polysaccharide of high molecular weight commonly used as a food thickening agent (for example, in salad dressings) and as a stabiliser (for example, in cosmetic products). Its main chain is constituted of glucose units and its side chain is a trisaccharide consisting of alpha-D-mannose which contains an acetyl group, beta-D-glucuronic acid, and a terminal beta-D-mannose unit linked with a pyruvate group.

Optionally, the composition of the invention may further comprise fat or/and oil. Fat or/and oil are standard ingredients in food concentrate compositions and contribute generally to the taste and texture of the gel composition, but also to final food products for which the consumer has made use of the gel composition in its preparation. Preferably, the fat or/and oil are present in the composition of the invention in the range of 3 to 13% (by weight of the total composition).

In a still further embodiment, the flavourings are present in the composition of the invention in the range of 5 to 30%, preferably from 13 to 30% (by weight of the total composition).

The composition of the present invention does not include polyol, guar gum, locust bean gum, tara gum, cassia gum, konjac mannan, carrageenan or any combination thereof. This disclosure (not according to the invention) relates to a food product comprising the composition of the invention, and wherein the food product is a bouillon, condiment, seasoning, sauce, soup or gravy.

As used in this specification, the words "comprises", "comprising", and similar words, are not to be interpreted in an exclusive or exhaustive sense. In other words, they are intended to mean "including, but not limited to".

Further advantages and features of the present invention are apparent from the examples.

### EXAMPLES

The invention is further described with reference to the following examples. It will be appreciated that the invention as claimed is not intended to be limited in any way by these examples.

### Example 1:

The general procedure for preparing gel compositions of the invention is as follows:
- prepare a pre-mix of the gelling agent(s) (e.g. with maltodextrin and/or glucose syrup powder);
- add the pre-mix to water with mixing at about 50°C;
- heat the mix to a temperature of at least 90°C for at least 2 minutes;
- add all other ingredients (including the salts and flavourings);
- heat the mix at a temperature of at least 72°C for at least 5 minutes in order to pasteurize the mix;
- cool the mix to between ca. 40-70°C;
- fill the composition into containers and allow the gel to form and set at room-temperature.

### Example 2-3 (comparative example):

A composition was prepared according to the general method as described in Example 1 using the amounts of ingredients in the following table:

| | **Example 2** | **Example 3** |
|---|---|---|
| **Ingredient (%w/w)** | **Amount [%]** | **Amount [%]** |
| Added Water | 52 | 52 |
| Salt | 1.5 | 5.0 |
| Pea starch | 4.0 | 4.0 |
| Xanthan | 0 | 0 |
| Oil/ fat | 5 | 5 |
| Flavourings | 32.7 | 29.2 |
| Sugar | up to 100 | up to 100 |
| **Rupture Strength [g]** | 20,8 ± 0,7 | 21,7 ± 3,3 |
| **Total moisture (%)** | 54.9 | 54.8 |
| **Salt content** (on basis of total moisture content) | 2.6 | 8.3 |
| **Pea starch content** (on basis of total moisture content) | 7.1 | 7.1 |

Both examples showed a very soft but shape retaining gel behaviour. Nevertheless a lot of syneresis could be observed, which is not desired as it leads to minor acceptance of the product.

### Example 4-10:

A composition according to the invention was prepared according to the general method of Example 1 using the amounts of ingredients as in the following table:

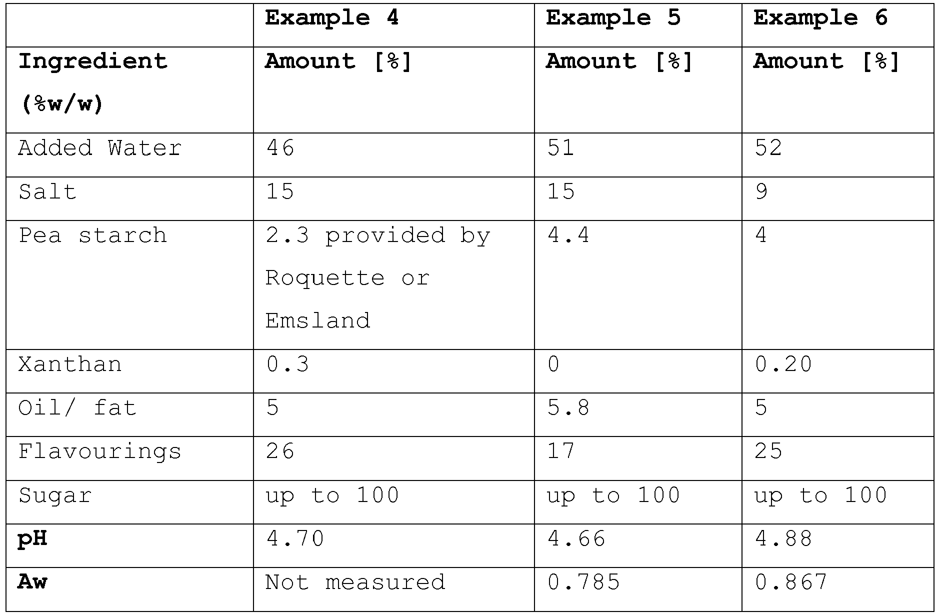

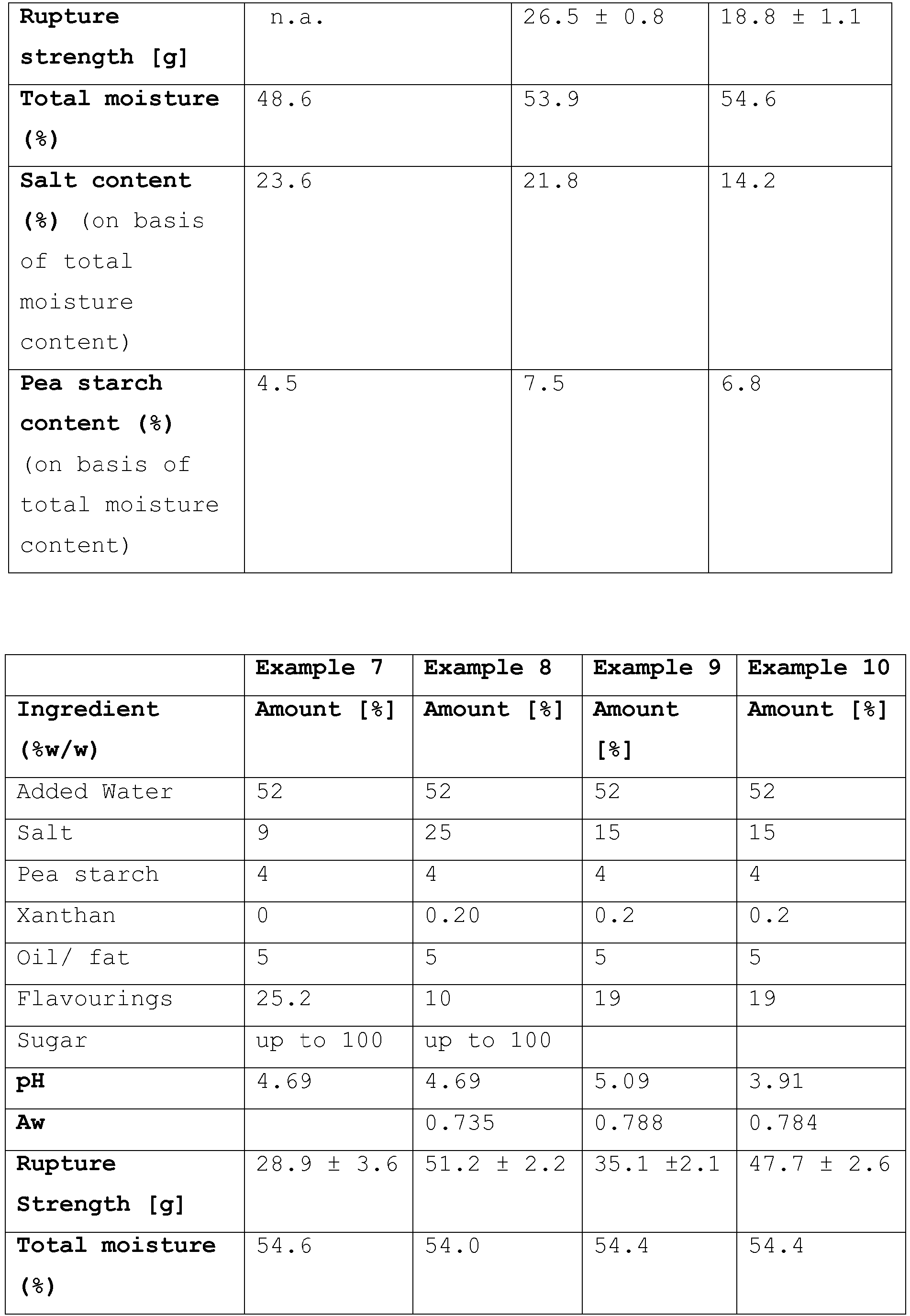

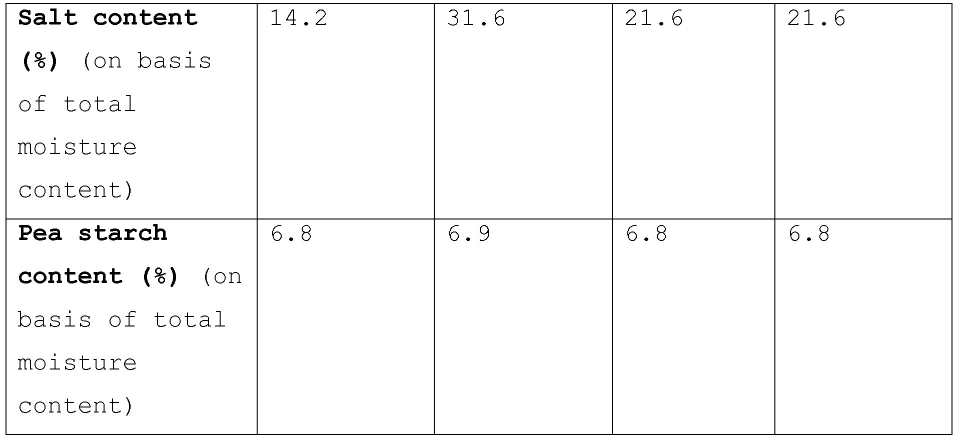

### Example 11-13:

A composition according to the invention was prepared according to the general method of Example 1 using the amounts of ingredients in the following table:

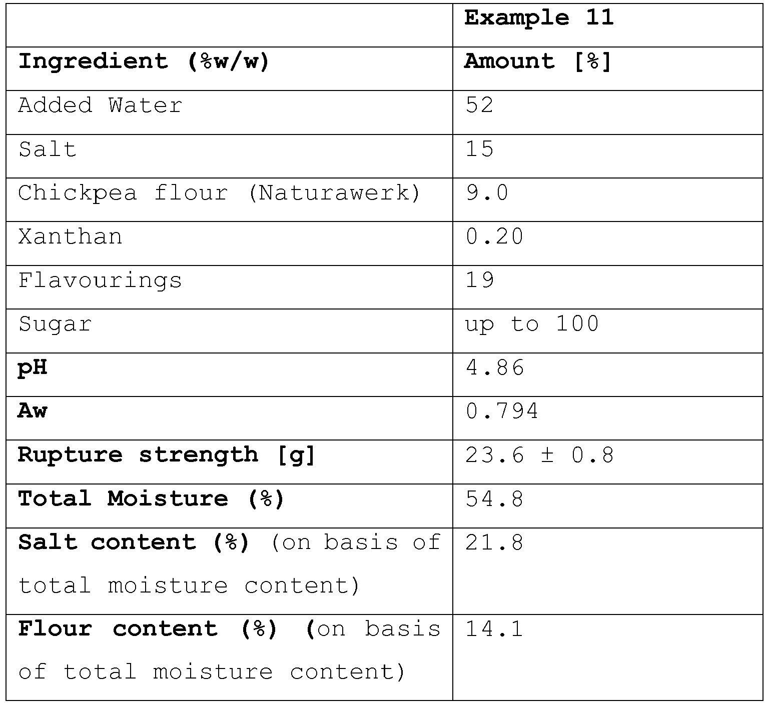

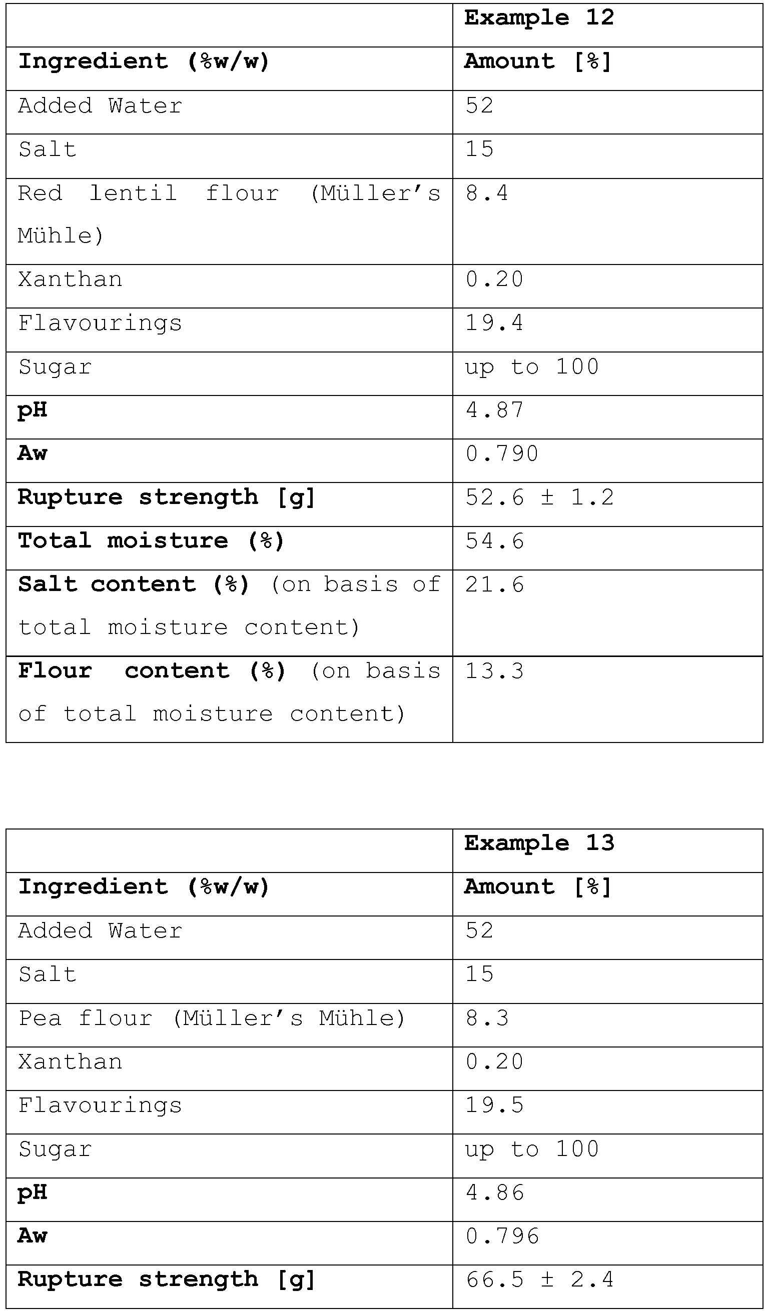

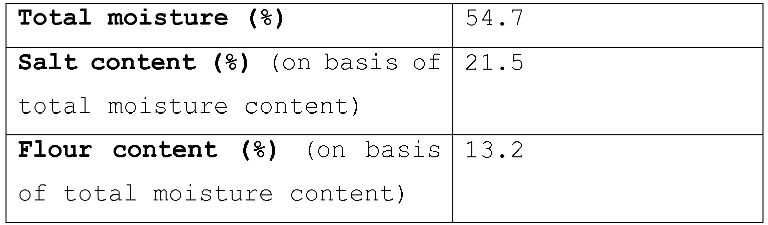

### Example 14: Comparison example with corn starch

| **Ingredient (%w/w)** | **Amount [%]** |
|---|---|
| Added Water | 52 |
| Salt | 15 |
| Corn starch | 7 |
| Xanthan | 0.20 |
| Flavourings | 20.8 |
| Sugar | up to 100 |
| **pH** | 4.66 |
| **Aw** | 0.794 |
| **Rupture strength [g]** | 59.1 ± 1.2 |

The example with corn starch showed a shape retaining strong gel. Nevertheless syneresis could be observed after three month, which is not desired as it leads to minor acceptance of the product.

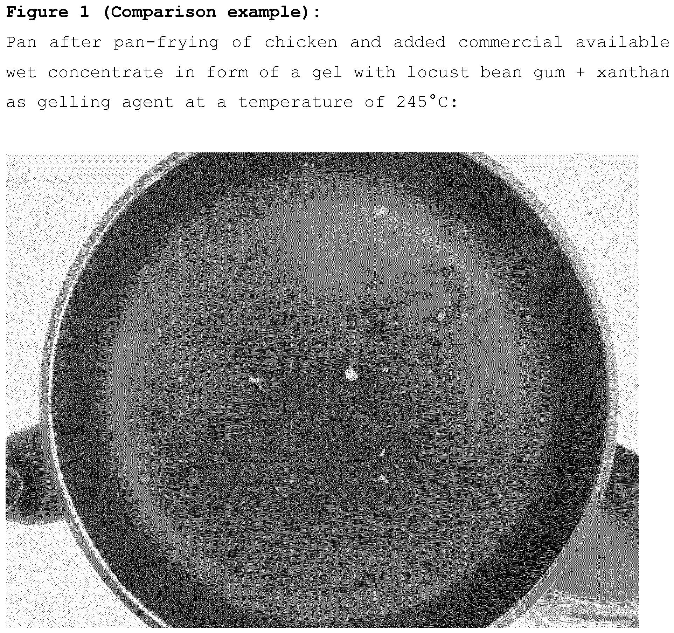

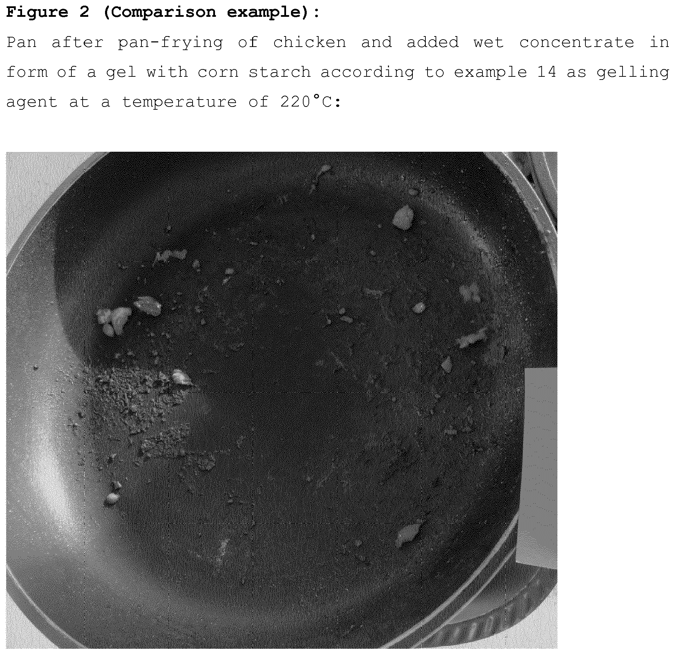

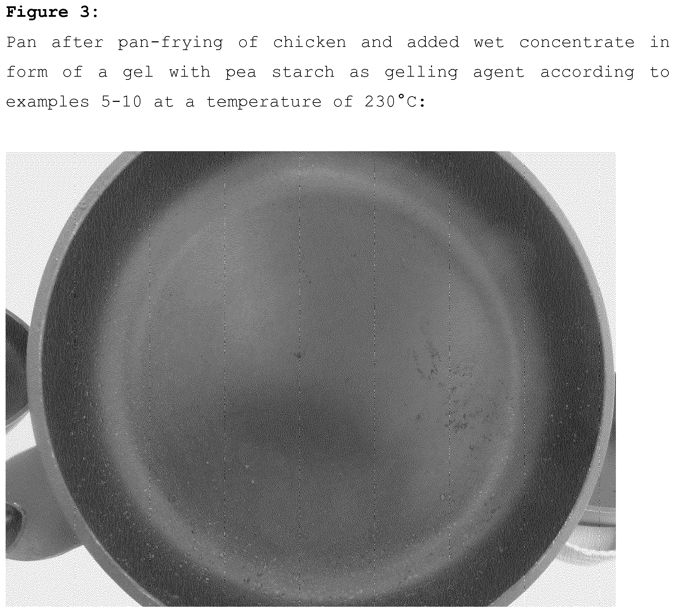

**Example 15:** Pan example:
Chicken was pan-fried. A commercially available wet concentrate with locust bean gum and xanthan as gelling agents was added into the pan to the chicken and stirred. The temperature of the pan was immediately measured using an infrared thermometer. The commercial available product showed a film burning in the pan at 160°C. The procedure was repeated at a temperature of 245°C and a similar film burning was again observed within the pan. As an additional comparison example a wet concentrate with corn starch as gelling agent (see example 14) within the same settings at a temperature of 220°C was used. The use of corn starch showed also film burning by direct contact with a hot pan. By using the concentrate with pea starch according to examples 5-10 within the same settings at a temperature of 170°C or 230°C no film burnings by direct contact with a hot pan were observed. Using pea starch shows a consumer benefit as no film burning occurred. A picture of a pan after the pan-frying of chicken with the concentrate based on locust bean gum + xanthan at a temperature of 245°C is shown in figure 1. A picture of a pan after the pan-frying of chicken with the concentrate with corn starch at a temperature of 230°C is shown in figure 2. A picture of a pan after the pan-frying of chicken with the concentrate with pea starch according to examples 5-10 at a temperature of 230°C is shown in figure 3.

### Example 16: Syneresis:

No syneresis under normal storage conditions after 3 months (20-30°C) has been observed for examples 4-10 with pea starch as gelling agent showing that xanthan has no influence on the syneresis, as also without xanthan no syneresis has been observed.

### Example 17:

Rupture strength of the resulting gels from the Examples 2 to 14 were determined.

The term "rupture strength" relates to the deformation force needed to break a gel or to the maximium positive force observed. The rupture strength of a gel should be at least 15 g, but preferably greater than 25g, as measured using a Texture Analyser.

Rupture strength was measured using a Texture Analyser TAXT2 (Microstable systems) according to the following conditions:
- load cell: 5 kg.
- Penetration test using a cylindrical probe of 1.27 cm diameter.
- The measurement is done directly on the sample in the final container.
- Test conditions: pre-test speed: 1 mm/s, test speed: 0.5 mm/s, post speed: 10 mm/s. Measurement was stopped at 10 mm penetration depth.
- The rupture strength is recorded as the peak or maximum positive force of the curve force versus penetration depth.

The resulting products from the Examples 2 to 14 were gel compositions which had a rupture strength of above 18.8 g which when dissolved in water and heated for 1 min delivered the texture of a bouillon.

### Example 18:

Measuring the dissolution time of 24g jellified product in 500ml of hot water (90°C-95°C) under continuously stirring at 500rpm shows, that example 6 (pea starch/xanthan) has a quicker dissolution time as the jellified commercial available products having a gelling agent of locust bean gum/xanthan or carrageenan/xanthan.

| Gelling agent | Dissolution time in hot water (90-95°C) |
|---|---|
| Example 6 (pea starch/xanthan) | 15sec |
| Locust bean gum/xanthan | 20sec |
| Carrageenan/xanthan | 30sec |

## Claims

1. A composition for preparing a food product, the composition comprising:
i) water in an amount of 44 to 65% (by weight of the total composition),
ii) flavourings in an amount of 1 to 45% (by weight of the total composition),
iii) salt in an amount of 10 to 41% (by weight of the total moisture),
iv) legume starch in an amount of 4 to 11% (by weight of the total moisture);
wherein the composition is in the form of a gel and does not include polyol, guar gum, locust bean gum, tara gum, cassia gum, konjac mannan, carrageenan or any combination thereof.

2. The composition according to claim 1, wherein the legume starch is pea starch, chickpea starch, lentil starch, red lentil starch, bean starch, mung bean starch, or a combination thereof.

3. The composition according to claim 1 to 2, wherein the legume starch is pea starch.

4. The composition according to one of the claims 1 to 3, wherein the composition further comprises xanthan.

5. The composition according to claim 4, wherein the xanthan is present in the composition in an amount of 0.05 to 0.3% (by weight of the total composition).

6. The composition according to one of the claims 1 to 5, wherein the composition further comprises fat and/or oil.

7. The composition according to claim 6, wherein an amount of fat and/or oil is in the range 1 to 10% (by weight of the total composition).

8. The composition according to one of the claims 1 to 7, wherein the amount of flavourings is in the range of 18 to 36% (by weight of the total composition).

9. The composition according to one of the claims 1 to 8, wherein the amount of salt is in the range of 14 to 34% (by weight of the total moisture).

10. The composition according to one of the claims 1 to 9, having an Aw value of less than 0.9.

11. A process for preparing a composition in the form of a gel for preparing a food product according to one of the claims 1 to 10 comprising the steps:
a) mixing legume starch as a gelling agent in water at a temperature below 60°C; wherein optionally sugar/glucose powder is mixed with the legume starch before water is added;
b) heating the mixture to a temperature of at least 80°C, preferably to at least 90°C, and maintain the temperature for at least 2min at that temperature;
c) adding salt and flavourings and mixing further;
d) pasteurizing the mixture of step c) at a temperature of at least 70°C, preferably of at least 80°C;
e) cooling the mixture after pasteurization to a temperature within the range 30°C to 75°C, preferably 35°C to 70°C, more preferably 40°C to 70°C;
f) filling the mixture after pasteurization into packaging containers;
g) allowing setting of the mixture in said packaging containers.

12. The process according to claim 11, wherein the legume starch is added in the form of a powder or as a slurry of starch in cold water and/or oil.

13. A use of the composition according to one of the claims 1 to 10 for the preparation of a food product.

## Patentansprüche

1. Zusammensetzung zum Herstellen eines Nahrungsmittelprodukts, wobei die Zusammensetzung Folgendes umfasst:
i) Wasser in einer Menge von 44 bis 65 % (bezogen auf das Gewicht der Gesamtzusammensetzung),
ii) Aromen in einer Menge von 1 bis 45 % (bezogen auf das Gewicht der Gesamtzusammensetzung),
iii) Salz in einer Menge von 10 bis 41 % (bezogen auf das Gewicht der Gesamtfeuchtigkeit),
iv) Hülsenfruchtstärke in einer Menge von 4 bis 11 % (bezogen auf das Gewicht der Gesamtfeuchtigkeit);
wobei die Zusammensetzung in Form eines Gels vorliegt und kein Polyol, Guargummi, Johannisbrotkernmehl, Taragummi, Kassiagummi, Konjakmannan, Carrageen oder beliebige Kombination davon einschließt.

2. Zusammensetzung nach Anspruch 1, wobei die Hülsenfruchtstärke Erbsenstärke, Kichererbsenstärke, Linsenstärke, Stärke roter Linsen, Bohnenstärke, Mungbohnenstärke oder eine Kombination davon ist.

3. Zusammensetzung nach Anspruch 1 bis 2, wobei die Hülsenfruchtstärke Erbsenstärke ist.

4. Zusammensetzung nach einem der Ansprüche 1 bis 3, wobei die Zusammensetzung ferner Xanthan umfasst.

5. Zusammensetzung nach Anspruch 4, wobei das Xanthan in der Zusammensetzung in einer Menge von 0,05 bis 0,3 % (bezogen auf das Gewicht der Gesamtzusammensetzung) vorhanden ist.

6. Zusammensetzung nach einem der Ansprüche 1 bis 5, wobei die Zusammensetzung ferner Fett und/oder Öl umfasst.

7. Zusammensetzung nach Anspruch 6, wobei eine Menge an Fett und/oder Öl im Bereich von 1 bis 10 % (bezogen auf das Gewicht der Gesamtzusammensetzung) liegt.

8. Zusammensetzung nach einem der Ansprüche 1 bis 7, wobei die Menge an Aromen im Bereich von 18 bis 36 % (bezogen auf das Gewicht der Gesamtzusammensetzung) liegt.

9. Zusammensetzung nach einem der Ansprüche 1 bis 8, wobei die Menge an Salz im Bereich von 14 bis 34 % (bezogen auf das Gewicht der Gesamtfeuchtigkeit) liegt.

10. Zusammensetzung nach einem der Ansprüche 1 bis 9 mit einem Aw-Wert von weniger als 0,9.

11. Verfahren zum Herstellen einer Zusammensetzung in Form eines Gels zum Herstellen eines Nahrungsmittelprodukts nach einem der Ansprüche 1 bis 10, umfassend die folgenden Schritte:
a) Mischen von Hülsenfruchtstärke als ein Geliermittel in Wasser bei einer Temperatur von unterhalb 60 °C; wobei wahlweise Zucker-/Glukosepulver mit der Hülsenfruchtstärke gemischt wird, bevor Wasser zugegeben wird;
b) Erwärmen der Mischung auf eine Temperatur von mindestens 80 °C, vorzugsweise auf mindestens 90 °C, und Halten der Temperatur für mindestens 2 min auf dieser Temperatur;
c) Zugeben von Salz und Aromen und weiteres Mischen;
d) Pasteurisieren der Mischung aus Schritt c) bei einer Temperatur von mindestens 70 °C, vorzugsweise von mindestens 80 °C;
e) Kühlen der Mischung nach Pasteurisierung auf eine Temperatur im Bereich von 30 °C bis 75 °C, vorzugsweise 35 °C bis 70 °C, mehr bevorzugt 40 °C bis 70 °C;
f) Abfüllen der Mischung nach Pasteurisierung in Verpackungsbehälter;
g) Setzenlassen der Mischung in den Verpackungsbehältern.

12. Verfahren nach Anspruch 11, wobei die Hülsenfruchtstärke in Form eines Pulvers oder als Stärkeaufschlämmung in kaltem Wasser und/oder Öl zugegeben wird.

13. Verwendung der Zusammensetzung nach einem der Ansprüche 1 bis 10 für die Herstellung eines Nahrungsmittelprodukts.

## Revendications

1. Composition pour la préparation d'un produit alimentaire, la composition comprenant :
i) de l'eau en une quantité de 44 à 65 % (en poids de la composition totale),
ii) des arômes en une quantité de 1 à 45 % (en poids de la composition totale),
iii) du sel en une quantité de 10 à 41 % (en poids de l'humidité totale),
iv) de l'amidon de légumineuse en une quantité de 4 à 11 % (en poids de l'humidité totale);
la composition étant sous la forme d'un gel et n'incluant pas de polyol, de gomme de guar, de gomme de caroube, de gomme tara, de gomme cassia, de konjac mannane, de carraghénane ou n'importe quelle combinaison de ceux-ci.

2. Composition selon la revendication 1, dans laquelle l'amidon de légumineuse est de l'amidon de pois, de l'amidon de pois chiche, de l'amidon de lentille, de l'amidon de lentille rouge, de l'amidon de haricot, de l'amidon de haricot mungo ou une combinaison de ceux-ci.

3. Composition selon la revendication 1 à 2, dans laquelle l'amidon de légumineuse est de l'amidon de pois.

4. Composition selon l'une des revendications 1 à 3, dans laquelle la composition comprend en outre du xanthane.

5. Composition selon la revendication 4, dans laquelle le xanthane est présent dans la composition en une quantité de 0,05 à 0,3 % (en poids de la composition totale).

6. Composition selon l'une des revendications 1 à 5, dans laquelle la composition comprend en outre une graisse ou une huile.

7. Composition selon la revendication 6, dans laquelle une quantité de graisse ou d'huile est dans la plage de 1 à 10 % (en poids de la composition totale).

8. Composition selon l'une des revendications 1 à 7, dans laquelle la quantité d'arômes est dans la plage de 18 à 36 % (en poids de la composition totale).

9. Composition selon l'une des revendications 1 à 8, dans laquelle la quantité de sel est dans la plage de 14 à 34 % (en poids de l'humidité totale).

10. Composition selon l'une des revendications 1 à 9, ayant une valeur Aw inférieure à 0,9.

11. Procédé de préparation d'une composition sous la forme d'un gel pour la préparation d'un produit alimentaire selon l'une des revendications 1 à 10 comprenant les étapes :
a) mélanger l'amidon de légumineuse en tant qu'agent gélifiant dans de l'eau à une température inférieure à 60 °C ; dans lequel éventuellement de la poudre de sucre/glucose est mélangée à l'amidon de légumineuse avant que l'eau soit ajoutée ;
b) chauffer le mélange à une température d'au moins 80 °C, de préférence à au moins 90 °C et maintenir la température pendant au moins 2 min à cette température ;
c) ajouter du sel et des arômes et mélanger encore ;
d) pasteuriser le mélange de l'étape c) à une température d'au moins 70 °C, de préférence d'au moins 80 °C ;
e) refroidir le mélange après pasteurisation à une température dans la plage de 30 °C à 75 °C, de préférence 35 °C à 70 °C, plus préférablement 40 °C à 70 °C;
f) remplir le mélange après pasteurisation dans des récipients d'emballage ;
g) permettre la prise du mélange dans lesdits récipients d'emballage.

12. Procédé selon la revendication 11, dans lequel l'amidon de légumineuse est ajouté sous la forme d'une poudre ou en tant que bouillie d'amidon dans de l'eau froide et/ou de l'huile.

13. Utilisation de la composition selon l'une des revendications 1 à 10 pour la préparation d'un produit alimentaire.
